# EUROPEAN PATENT APPLICATION

(11) **EP 4 451 544 A1**
(43) Date of publication of application: **23.10.2024**
(21) Application number: 22909955.1
(22) Date of filing: 19.12.2022
(51) Int. Cl.: H02P 3/22, B60L 3/00

(54) **SAFETY CONTROL METHOD AND APPARATUS FOR ELECTRIC DRIVE SYSTEM**

(30) Priority: 24.12.2021 CN 202111602357
(71) Applicant: Beijing Chehejia Automobile Technology Co., Ltd., Beijing 101300 (CN)
(72) Inventor: ZHENG, Lifu, Beijing 101300 (CN); XING, Zengzhen, Beijing 101300 (CN); MA, Yong, Beijing 101300 (CN)
(74) Representative: Loo, Chi Ching
(86) International application number: PCT/CN2022/140136
(87) International publication number: WO 2023/116643

(57) **Abstract**

The present invention relates to a safety control method and apparatus for an electric drive system, a device, and a storage medium. The safety control method for an electric drive system comprises: obtaining a current working mode of an electric drive system, wherein the current working mode comprises a boost charging mode and a power output mode; configuring a safety state corresponding to the current working mode for the electric drive system; and when a fault occurs, controlling the electric drive system to enter the safety state, wherein the safety state is used for enabling the output torque of the electric drive system to be less than or equal to a preset torque value corresponding to the current working mode.

## Description

### CROSS-REFERENCE TO THE RELATED APPLICATION

The present application claims priority to Chinese patent application No. 202111602357.3, filed on December 24, 2021 before the China National Intellectual Property Administration, the entire contents of which are incorporated herein by reference.

### TECHINCAL FIELD

The present disclosure relates to the technical field of vehicles, in particular to a safety control method, a safety control device, a safety control apparatus for an electric drive system, and a storage medium.

### BACKGROUND

With the rapid development of electric vehicles, the voltage platform of electric vehicles is gradually upgrading from 400V to 800V. In order to enable charging facilities of the low-voltage platform on the market, such as the charging facilities of the 400V to 800V low-voltage platform, to charge the 800V high-voltage battery, appropriate changes are generally made to the electric drive system. A boost chopper function is developed utilizing the characteristics of the motor's winding circuit, so that the charging facilities of the 400V to 800V low-voltage platform is compatible, achieving boost charging of the 800V high-voltage battery in the electric drive system.

In the related technology, when a vehicle malfunctions, the motor controller will control the motor of the electric drive system to achieve active short circuit (ASC). However, when the electric drive system is in the boost charging mode, ASC will cause the electric drive system to produce an unexpected torque output, which does not meet the safety target requirement for the torque of the electric drive system. Therefore, there is an urgent need to design a new safety control method to ensure that the safety target requirement for the torque is met regardless of the operating mode of the electric drive system.

### SUMMARY

In order to solve the above technical problems, the present disclosure provides a safety control method, a safety control apparatus, a safety control device for an electric drive system and a storage medium.

In a first aspect, the present disclosure provides a safety control method for an electric drive system, including:
acquiring a current operating mode of the electric drive system, where the current operating mode includes a boost charging mode and a power output mode;
configuring a safety state corresponding to the current operating mode for the electric drive system;
controlling the electric drive system to enter the safety state in response to a fault, in the safety state, an output torque of the electric drive system is caused to be less than or equal to a preset torque value corresponding to the current operating mode.

In a second aspect, the present disclosure further provides a safety control apparatus for an electric drive system, including:
a first acquisition module, configured for acquiring a current operating mode of the electric drive system, and the current operating mode includes a boost charging mode and a power output mode;
a first configuration module, configured for configuring a safety state corresponding to a current operating mode for the electric drive system, in the safety state, the output torque of the electric drive system is caused to be less than or equal to a preset torque value corresponding to the current operating mode; and
a safety module, configured for controlling the electric drive system to enter the safety state in response to a fault.

In a third aspect, the present disclosure further provides a safety control device for an electric drive system, including:
a processor; and
a memory for storing executable instructions;
the processor is configured for read the executable instructions from the memory, and execute the executable instructions to implement the safety control method of the electric drive system of the first aspect.

In a fourth aspect, the present disclosure further provides a computer-readable storage medium storing a computer program that, when executed by a processor, causes the processor to implement the safety control method of the electric drive system in the first aspect.

In a fifth aspect, the present disclosure further provides a computer program product including a computer program or instructions that, when executed by a processor, implements the safety control method of the electric drive system in the first aspect.

According to the safety control method, the safety control apparatus and the safety control device for the electric drive system and the storage medium of the embodiment of the present disclosure, it is possible to acquire the current operating mode (the current operating mode includes the boost charge mode and the power output mode) of the electric drive system; configure a safety state corresponding to the current operating mode for the electric drive system; and control the electric drive system to enter the safety state in response to a fault, in the safety state, the output torque of the electric drive system is caused to be less than or equal to a preset torque value corresponding to the current operating mode. As can be seen, different from the related art that the same safety state is adopted regardless of the operating mode of the electric drive system, different safety states are defined for different operating modes of the electric drive system in the embodiment of the present disclosure. In this way, a corresponding safety state can be configured according to the current operating mode of the electric drive system, so that the electric drive system can enter the safety state corresponding to the current operating mode in response to a fault, thereby preventing from generating unexpected torque output regardless of the operating mode of the electric drive system, and achieving the purpose of meeting the safety target requirements for the torque.

### BRIEF DESCRIPTION OF THE DRAWINGS

The accompanying drawings, that are incorporated in the specification and constitute a part of the specification, illustrate embodiments consistent with the present disclosure and explain the principles of the present disclosure in conjunction with the specification.

In order to more clearly illustrate technical solutions of embodiments of the present disclosure or the related art, drawings that are used in explaining the embodiments or the related art are briefly introduced below. Apparently, other drawings may be obtained by those skilled in the art based on these drawings without paying any creative work.
FIG.1 is a schematic flow chart of a safety control method for an electric drive system provided by an embodiment of the present disclosure;
FIG. 2 is a schematic diagram of a circuit structure of an electric drive system provided by an embodiment of the present disclosure when the electric drive system is in a power output mode;
FIG. 3 is a schematic diagram of a circuit structure of an electric drive system provided by an embodiment of the present disclosure when the electric drive system is in a boost charging mode;
FIG. 4 is a schematic diagram of a circuit structure of an electric drive system provided by an embodiment of the present disclosure;
FIG. 5 is a schematic diagram of another circuit structure of an electric drive system provided by an embodiment of the present disclosure;
FIG. 6 is a schematic diagram of yet another circuit structure of an electric drive system provided by an embodiment of the present disclosure;
FIG. 7 is a schematic structural diagram of a motor controller provided by an embodiment of the present disclosure;
FIG. 8 is a schematic structural diagram of another motor controller provided by an embodiment of the present disclosure;
FIG. 9 is a schematic flow chart of a safety control process for an electric drive system provided by an embodiment of the present disclosure;
FIG. 10 is a schematic structural diagram of a safety control apparatus for an electric drive system provided by an embodiment of the present disclosure; and
FIG. 11 is a schematic structural diagram of a safety control device for an electric drive system provided by an embodiment of the present disclosure.

### DETAILED DESCRIPTION

Embodiments of the present disclosure will be described in more detail below with reference to the accompanying drawings. Although some embodiments of the present disclosure are shown in the accompanying drawings, it should be understood that the present disclosure can be implemented in various forms and should not be construed as being limited to the embodiments set forth herein. These embodiments are only provided for a more thorough and complete understanding of the present disclosure. It should be understood that the drawings and embodiments of the present disclosure are only used for illustrative purposes and are not used to limit the protection scope of the present disclosure.

It should be understood that various steps described in the method embodiments of the present disclosure may be performed in different orders and/or in parallel. In addition, the method embodiments may include additional steps and/or omit the steps shown. The scope of the present disclosure is not limited in this respect.

The term "including" and variations thereof used herein are open inclusions, i.e., "including but not limited to". The term "based on" means "at least partially based on". The term "one embodiment" means "at least one embodiment"; the term "another embodiment" means "at least one additional embodiment"; the term "some embodiments" means "at least some embodiments". The relevant definitions of other terms will be given in the following description.

It should be noted that the concepts such as "first" and "second" mentioned in the present disclosure are only used to distinguish different devices, modules or units, and are not used to limit the order of the functions performed by these devices, modules or units or interdependence thereof.

It should be noted that the phrase of "one" and "plurality" mentioned in the present disclosure are illustrative rather than restrictive, and those skilled in the art should understand that unless otherwise clearly indicated in the context, it should be understood as "one or more".

The names of the messages or information exchanged between multiple devices in the embodiments of the present disclosure are only used for illustrative purposes and are not used to limit the scope of these messages or information.

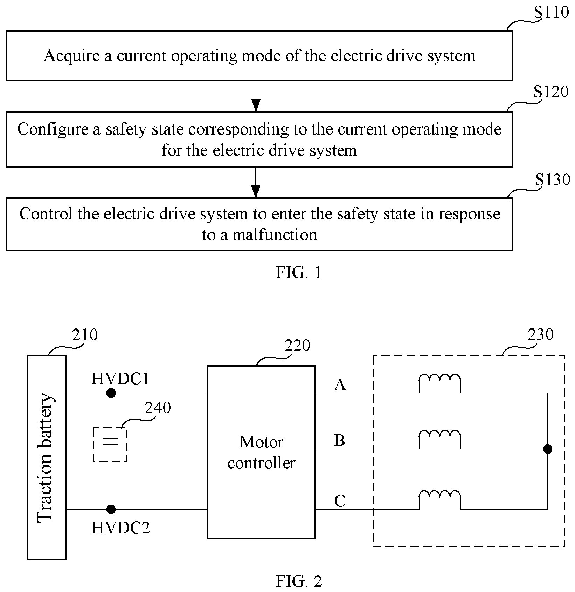

FIG.1 is a schematic flow chart of a safety control method for an electric drive system provided by an embodiment of the present disclosure.

In some embodiments of the present disclosure, the method shown in FIG. 1 may be applied to a motor controller of a vehicle.

As shown in FIG. 1, the safety control method for the electric drive system may include steps S110 to S130 described below.

At S 110, a current operating mode of the electric drive system is acquired.

In the embodiment of the present disclosure, when the motor controller wants to configure a safety state for the electric drive system, the current operating mode of the electric drive system needs to be determined first.

The current operating mode includes a boost charging mode, a power output mode and a stationary mode.

In some embodiments, the power output mode means that the motor of the electric drive system outputs a torque to provide the vehicle with a mechanical power for driving the entire vehicle.

As an example, FIG. 2 is a schematic diagram of the circuit structure of the electric drive system provided by an embodiment of the present disclosure when the electric drive system is in the power output mode. Referring to FIG. 2, the electric drive system includes a traction battery 210, a motor controller 220, a motor 230, and a filter capacitor 240 which is a high-voltage path filter capacitor for the motor controller. When the current operating mode of the electric drive system is the power output mode, the traction battery 210 supplies power for the motor controller 220 through a first DC output terminal HVDC1 and a second DC output terminal HVDC2, the motor controller 220 outputs current through phase line A, phase line B, and phase line C so as to control the motor 230 to output a torque, thereby achieving the driving of the entire vehicle.

In some embodiments, the boost charging mode means that the traction battery of the electric drive system is charged by the charging facility.

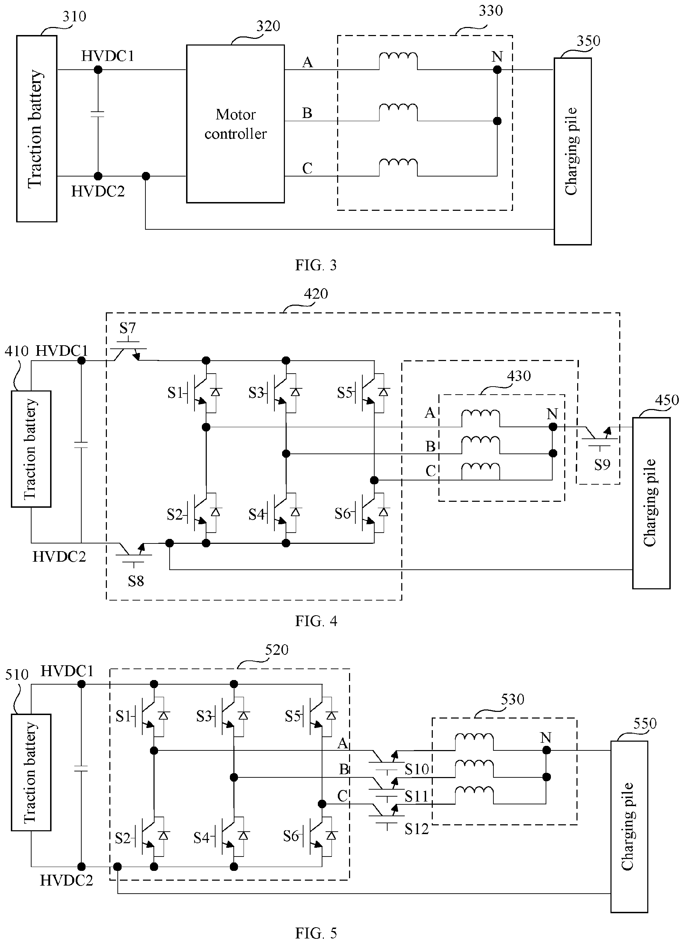

As an example, FIG. 3 is a schematic diagram of the circuit structure of the electric drive system provided by an embodiment of the present disclosure when the electric drive system is in the boost charging mode. Referring to FIG. 3, when the current operating mode of the electric drive system is the boost charging mode, the vehicle is parked and connected to a charging pile 350, and the neutral line N of the motor 330 and the second DC output terminal HVDC2 are both connected to the charging interface of the charging pile 350. The motor controller 320 and the motor 330 are reused as a boost circuit for boosting the low voltage output of the charging pile 350 and charging the traction battery 310, and the charging of the traction battery 310 can be controlled by the motor controller 320 through controlling the three-phase current.

In some embodiments, the stationary mode means that the motor of the electric drive system does not output the torque and the electric drive system is not charged by a charging device.

In some embodiments, step S110 has various specific implementations, and typical examples are described below, but they do not constitute a limitation on the embodiments of the present disclosure.

In some embodiments, the motor controller may communicate with a vehicle controller, and receive the current operating mode of the electric drive system sent by the vehicle controller.

In some other embodiments, the motor controller may acquire a real-time state of charge (SOC) of the traction battery, and determine the current operating mode of the electric drive system based on the real-time state of charge.

In some embodiments, when the real-time state of charge of the traction battery decreases over time, it can be determined that the current operating mode is the power output mode; when the real-time state of charge of the traction battery increases over time, it can be determined that the current operating mode is the boost charging mode; when the real-time state of charge of the traction battery does not change over time, it can be determined that the current operating mode is the stationary mode.

At S 120, a safety state corresponding to the current operating mode is configured for the electric drive system.

In the embodiment of the present disclosure, the motor controller may configure a safety state for the electric drive system based on the current operating mode of the electric drive system.

In the safety state, the output torque of the electric drive system is caused to be less than or equal to a preset torque value corresponding to the current operating mode. In this way, the electric drive system will not output an unexpected torque value to meet the safety target requirement for the output torque.

In some embodiments, the current operating mode is the boost charging mode. At this time, the safety state of the electric drive system can be configured as a first safety state.

After research, the applicant found that in the case that the electric drive system operates in the boost charging mode, a huge output torque will be generated when the motor controller enters the ASC state, which may cause unexpected movement of the vehicle and fail to meet the safety target requirement for the torque.

In view of the problems existing in the related art regarding the safety state of the electric drive system when operating in the boost charging mode, the applicant believes that it is necessary to prevent unexpected torque output when the electric drive system operates in the boost charging mode.

In view of the above, in the first safety state, the output torque of the electric drive system is caused to be 0, thereby preventing unexpected torque output and further preventing unexpected movement of the vehicle.

In some other embodiments, the current operating mode is the power output mode. At this time, the safety state of the electric drive system can be configured as a second safety state.

In some embodiments, in the second safety state, the output torque of the electric drive system is caused to be less than or equal to a preset torque value corresponding to the power output mode, thereby preventing unexpected torque output and ensuring the torque safety of the entire vehicle.

In some embodiments, the preset torque value corresponding to the power output mode can be configured by those skilled in the art according to actual conditions, which is not limited here. For example, the preset torque value corresponding to the power output mode is the output torque value at the moment before the electric drive system enters the second safety state, but is not limited thereto.

In some other embodiments, the current operating mode is the stationary mode. At this time, the safety state of the electric drive system can be configured as a third safety state.

In some embodiments, in the third safety state, the output torque of the electric drive system is caused to be 0, thereby preventing unexpected torque output and further preventing unexpected movement of the entire vehicle.

At S130, the electric drive system is controlled to enter the safety state when the electric drive system malfunctions.

In the present embodiment, when it is determined by the motor controller that a fault occurs in the entire vehicle, the electric drive system can be controlled to enter a safety state.

In some embodiments, the fault herein may include any faults that require the electric drive system to enter a safety state.

In some embodiments, when it is detected by the motor controller that the electric drive system malfunctions, the electric drive system may be controlled to enter the safety state.

In some other embodiments, when the motor controller receives a request for entering the safety state, the motor controller controls the electric drive system to enter the safety state.

In some embodiments, in response to a fault at a location other than the electric drive system of the vehicle and the electric drive system needs to enter the safety state, the vehicle controller can send a request for entering the safety state to the motor controller, and the motor controller controls the electric drive system to enter the safety state in response to the request for entering the safety state.

In some embodiments, when the current operating mode is the boost charging mode, the electric drive system can be controlled to enter the first safety state.

In some other embodiments, when the current operating mode is the power output mode, the electric drive system can be controlled to enter the second safety state.

In yet some other embodiments, when the current operating mode is the stationary mode, the electric drive system may be controlled to enter the third safety state.

According to the safety control method for the electric drive system of the embodiment of the present disclosure, the current operating mode of the electric drive system is acquired, and the current operating mode includes the boost charging mode and the power output mode; a safety state corresponding to the current operating mode is configured for the electric drive system; and the electric drive system is controlled to enter the safety state in response to a fault, and in the safety state, the output torque of the electric drive system is caused to be less than or equal to a preset torque value corresponding to the current operating mode. As can be seen, different from the related art in which the electric drive system corresponds to the same safety state regardless of the operating mode thereof, the embodiment of the present disclosure defines different safety states for different operating modes of the electric drive system. Thus, a corresponding safety state can be configured according to the current operating mode of the electric drive system, so that in response to a fault, the electric drive system can enter the safety state corresponding to the current working mode. In this way, the electric drive system is avoided generating unexpected torque output regardless of the operating mode thereof, thereby achieving the purpose of meeting the safety target requirements for the torque.

In another embodiment of the present disclosure, the safety state corresponding to the current operating mode is configured for the electric drive system as follows: when the current operating mode is the boost charging mode, the safety state of the electric drive system is configured as the first safety state; and the electric drive system is controlled to enter the safety state as follows: the electric drive system is controlled to enter the first safety state. In the first safety state, the charging circuit between the electric drive system and the charging pile is disconnected, and the power supply circuit of the motor in the electric drive system is disconnected.

In the embodiment of the present disclosure, when it is determined by the motor controller that the current operating mode is the boost charging mode, the safety state of the electric drive system can be configured as the first safety state. In this way, in response to a fault, the motor controller can control the electric drive system to enter the first safety state, so that the charging circuit between the electric drive system and the charging pile is disconnected, and the power supply path of the motor in the electric drive system is disconnected.

The applicant has found through research that in the case that the electric drive system operates in the boost charging mode, a huge output torque will be generated when the motor controller enters the ASC state, resulting in not only unexpected movement of the vehicle, but also charging short circuit. The short circuit current may cause the charging pile and the power module (i.e., the inverter) in the motor controller to burn out. Therefore, it is necessary to define a new safety state when the electric drive system operates in the boost charging mode.

In view of the problems existing in the related art regarding the safety state of the electric drive system when operating in the boost charging mode, the applicant believes that when the electric drive system operates in the boost charging mode, the safety target requirements of the electric drive system should be defined from the perspective of the electric drive system being served as a power component and a boost charging component. On the one hand, as a power component, the electric drive system needs to avoid unexpected torque output (i.e., safety target requirements for the torque). On the other hand, as a boost charging component, the electric drive system needs to prevent the short circuit from occurring on the charging circuit between the electric drive system and the charging pile (i.e., the safety target requirement for charging).

In view of this matter, in the first safety state, the output torque of the electric drive system is caused to be 0, thereby avoiding unexpected torque output and further avoiding unexpected movement of the vehicle. In addition, the first safety state can also be used for disconnecting the charging circuit between the electric drive system and the charging pile to prevent the charging circuit from short-circuiting, thereby preventing the power modules in the charging pile and the electric drive system from being burned out.

In some embodiments, the applicant has found that when the electric drive system operates in the boost charging mode, controlling the electric drive system to enter ASC will cause the charging pile to apply a voltage to the motor, causing the sum of the three-phase currents of the motor to no longer be zero. At this time, the motor will generate a huge torque output, which will cause the entire vehicle to move unexpectedly and will introduce a safety hazard. However, in the embodiment of the present disclosure, in the case that the electric drive system operates in the boost charging mode, when the electric drive system is controlled to enter the first safety state, the power supply circuit of the motor in the electric drive system is disconnected, so that the motor has no power supply, thereby achieving the requirement of preventing unexpected torque output. The disconnection of the power supply circuit of the motor in the electric drive system may include the disconnection of the power supply circuit between the motor and the charging pile, and may also include the disconnection of the power supply circuit between the motor and the traction battery.

In some embodiments, the applicant has also found that when the electric drive system operates in the boost charging mode, controlling the electric drive system to enter the ASC will cause the charging pile to short-circuit, and the short-circuit current may even damage the silicon carbide power module of the motor controller. However, in the embodiment of the present disclosure, in the case that the electric drive system operates in the boost charging mode, when the electric drive system is controlled to enter the first safety state, since the charging circuit between the electric drive system and the charging pile is disconnected, the charging pile will not be short-circuited. In this way, the power modules of the electric drive system and the charging pile can be prevented from being damaged due to overcurrent.

In some embodiments, there are various specific implementations for controlling the electric drive system to enter the first safety state. Typical examples are described below, but they do not constitute limitations to the present disclosure.

In some embodiments, the safety state of the electric drive system may be configured as the first safety state by controlling a first switching device on the charging circuit to be turned off, controlling a second switching device on the power supply circuit between the motor and the charging pile to be turned off, and controlling a third switching device on the power supply circuit between the motor and the traction battery to be turned off, respectively.

In some embodiments, the first switching device, the second switching device, and the third switching device may each include at least one transistor, but is not limited thereto.

In some embodiments, switching devices may be respectively provided on the charging circuit, the power supply circuit between the motor and the charging pile, and the power supply circuit between the motor and the traction battery. Those skilled in the art should understand that, since there are common sections between different circuits, it is possible that a certain switching device is located on two circuits. For example, the first switching device may be located on both the charging circuit and the power supply circuit between the motor and the charging pile. However, as long as three switching devices are provided, each switching device can correspond to at least one circuit.

It can be understood, three switching devices are provided to control the on-off of the charging circuit, the power supply circuit between the motor and the charging pile, and the power supply circuit between the motor and the traction battery, so that the on-off control of other circuits will not be affected when one switching device is damaged.

In an example, illustratively, FIG. 4 is a schematic diagram of a circuit structure of an electric drive system provided by an embodiment of the present disclosure. Referring to FIG. 4, the motor controller 420 includes a transistor S7, a transistor S8, and a transistor S9, among them, the transistor S7 can be considered as the first switching device on the charging circuit, the transistor S8 can be considered as the second switching device on the power supply circuit between the motor and the traction battery, and the transistor S9 can be considered as the third switching device on the power supply circuit between the motor and the charging pile. When the transistor S7, the transistor S8, and the transistor S9 are turned off, the charging circuit between the charging pile and the traction battery can be disconnected to prevent the charging pile 450 from short-circuiting, and the power supply circuit between the traction battery 410 and the motor 430 and the power supply circuit between the charging pile 450 and the motor 430 can also be disconnected to prevent unexpected torque output.

It should be noted that FIG. 4 only illustrates one type of the positions of the first switching device, the second switching device, and the third switching device in their respective corresponding circuits, but is not limited to this. The specific positions of the first switching device, the second switching device, and the third switching device may be set according to actual conditions by those skilled in the art.

In some other embodiments, the safety state of the electric drive system may be configured as the first safety state by controlling the common section of the charging circuit and the power supply circuit to be disconnected.

In some embodiments, the common section of the charging circuit and the power supply circuit refers to a section located on the charging circuit, the power supply circuit between the motor and the charging pile, and the power supply circuit between the motor and the traction battery.

It can be understood that by controlling the common section of the charging circuit and the power supply circuit to be disconnected, the charging circuit and the power supply circuit can be disconnected at the same time, which is beneficial to saving circuit costs and facilitating control.

In some embodiments, controlling the common section of the charging circuit and the power supply circuit to be disconnected may include controlling the switching devices on each phase line to be turned off.

In some embodiments, the switching device may include at least one transistor, but is not limited thereto.

In some embodiments, for a three-phase motor, the switching devices on phase line A, phase line B, and phase line C are turned off.

In an example, illustratively, FIG. 5 is a schematic diagram of another circuit structure of an electric drive system provided by an embodiment of the present disclosure. Referring to FIG. 5, the motor controller 520 includes a transistor S 10, a transistor S11, and a transistor S12. When the transistor S 10, the transistor S 11, and the transistor S12 are turned off, the charging circuit between the charging pile and the traction battery can be disconnected to prevent the charging pile 550 from short-circuiting, and the power supply circuit between the traction battery 510 and the motor 530 as well as the power supply circuit between the charging pile 550 and the motor 530 can be disconnected to prevent unexpected torque output.

In some embodiments, controlling the common section of the charging circuit and the power supply circuit to be disconnected may include controlling an inverter in the electric drive system to be open-circuited.

In some embodiments, the motor controller may include an inverter, and controlling the inverter to be open-circuited means controlling all transistors in the inverter to be turned off.

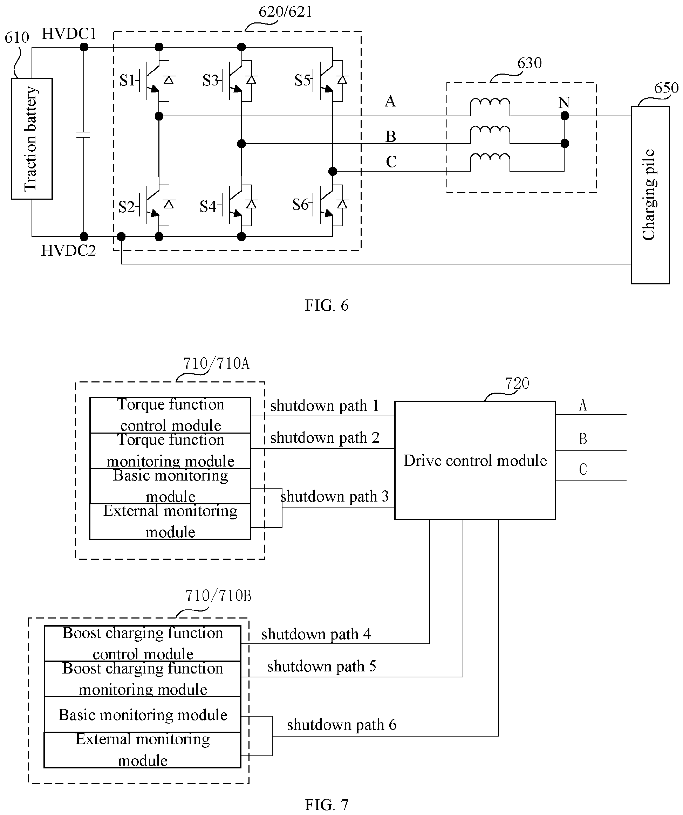

As an example, FIG. 6 is a schematic diagram of yet another circuit structure of an electric drive system provided by an embodiment of the present disclosure. Referring to FIG. 4, the motor controller 620 includes an inverter 621. When transistors S1, S2, S3, S4, S5, and S6 in the inverter 621 are all turned off, not only the charging circuit between the electric drive system and the charging pile can be disconnected to prevent the charging pile 650 from short-circuiting, but also the power supply circuit between the traction battery 610 and the motor 630 as well as the power supply circuit between the charging pile 650 and the motor 630 can be disconnected to prevent unexpected torque output.

It can be understood that the electric drive system enters the first safety state by controlling all transistors in the inverter to be turned off. On the one hand, there is no need to improve the circuit structure of the existing motor controller. On the other hand, the power supply circuit between the motor and the traction battery as well as the power supply circuit between the motor and the charging pile can be disconnected at the same time, achieving a simple way for causing the electric drive system to enter the safety state.

In some other embodiments of the present disclosure, the safety state corresponding to the current operating mode is configured for the electric drive system as follows: when the current operating mode is a power output mode, the safety state of the electric drive system is configured as the second safety state; and the electric drive system is controlled to enter the safety state by controlling the electric drive system to enter the second safety state. In the second safety state, the motor in the electric drive system is in the state of active short circuit.

In the embodiment of the present disclosure, when it is determined by the motor controller that the current operating mode is the power output mode, the safety state of the electric drive system can be configured as the second safety state. In this way, in response to a fault, the motor controller can control the electric drive system to enter the second safety state to achieve the active short circuit (ASC) of the motor in the electric drive system.

In some embodiments, the ASC of the motor means that all phase lines connected to the motor are short-circuited. For example, for a three-phase motor, phase line A, phase line B, and phase line C are short-circuited.

In an example, the motor controller may include a power module (i.e., an inverter). The ASC of the motor is achieved by controlling all the switching transistors on the supper bridge arms of the inverter to be turned on and controlling all the switching transistors on the lower bridge arms of the inverter to be turned off. Alternatively, the ASC of the motor is achieved by controlling all the switching transistors on the supper bridge arms of the inverter to be turned off and controlling all the switching transistors on the lower bridge arms of the inverter to be turned on.

For example, referring to FIG. 6, when transistors S1, S3, and S5 are turned on, and transistors S2, S4, and S6 are turned off, the ASC of the motor 430 can be achieved. When transistors S1, S3, and S5 are turned off, and transistors S2, S4, and S6 are turned on, the ASC of the motor 430 can also be achieved.

It can be understood that when the electric drive system is in power output mode, in response to a fault, the ASC of the motor can generate a negative torque (relative to the positive torque for driving the entire vehicle), and the output torque of the electric drive system is the sum of the negative torque and the positive torque. Therefore, the output torque of the electric drive system can be reduced. In this way, unexpected torque output can be prevented and the torque safety of the entire vehicle can be ensured.

In another embodiment of the present disclosure, in response to a fault, the electric drive system is controlled to enter the safety state by: detecting whether the electric drive system malfunctions; and controlling the electric drive system to enter the safety state when it is detected that the electric drive system malfunctions.

In the present embodiment, the motor controller can detect in real time whether the electric drive system malfunctions. When it is detected that the electric drive system malfunctions, the motor controller can control the electric drive system to enter a safety state corresponding to the current operating mode.

In some embodiments, various specific implementations may be adopted for detecting whether the electric drive system has a fault. Two typical examples are described below, but they do not constitute a limitation of the present disclosure.

In some embodiments, the motor controller includes two detection circuits, one of which is configured for detecting whether the electric drive system malfunctions when the electric drive system is in the boost charging mode, and the other is configured for detecting whether the electric drive system malfunctions when the electric drive system is in the power output mode.

As an example, FIG. 7 is a schematic structural diagram of a motor controller provided by an embodiment of the present disclosure. Referring to FIG. 7, the motor controller includes two detection circuits 710 and a drive control module 720. When the current operating mode of the electric drive system is the power output mode, the detection circuit 710A is activated, and the motor controller detects whether the electric drive system malfunctions through the detection circuit 710A. If it is detected by the detection circuit 710A that the electric drive system malfunctions, the motor controller can send a message for entering the safety state to the drive control module 720 through a shutdown path 1, a shutdown path 2 or a shutdown path 3, so that the drive control module 720 controls the electric drive system to enter the second safety state. When the current operating mode of the electric drive system is the boost charging mode, the detection circuit 710B is activated, and the motor controller detects whether the electric drive system malfunctions through the detection circuit 710B. If it is detected by the detection circuit 710B that the electric drive system malfunctions, the motor controller can send a message for entering the safety state to the drive control module 720 through a shutdown path 1, a shutdown path 2 or a shutdown path 3, so that the drive control module 720 controls the electric drive system to enter the first safety state.

In some other embodiments, the motor controller includes one detection circuit, and a detection strategy corresponding to the current operating mode is configured for the detection circuit, so that the detection circuit can detect whether the electric drive system malfunctions when the electric drive system is in the boost charging mode, and can also detect whether the electric drive system malfunctions when the electric drive system is in the power output mode.

In this case, detecting whether the electric drive system malfunctions includes: configuring a detection strategy corresponding to the current operating mode for the detection circuit of the electric drive system; and detecting, by a monitoring device in the detection circuit, whether the electric drive system malfunctions according to the detection strategy.

In some embodiments, the detection strategy may be any scheme capable of detecting whether the electric drive system malfunctions.

In some embodiments, when the current operating mode of the electric drive system is the boost charging mode, the motor controller can configure a detection strategy corresponding to the boost charging mode for the detection circuit. In this way, the detection circuit can detect whether the electric drive system malfunctions according to the detection strategy corresponding to the boost charging mode.

In some embodiments, when the current operating mode of the electric drive system is the power output mode, the motor controller can configure a detection strategy corresponding to the power output mode for the detection circuit. In this way, the detection circuit can detect whether the electric drive system malfunctions according to the detection strategy corresponding to the power output mode.

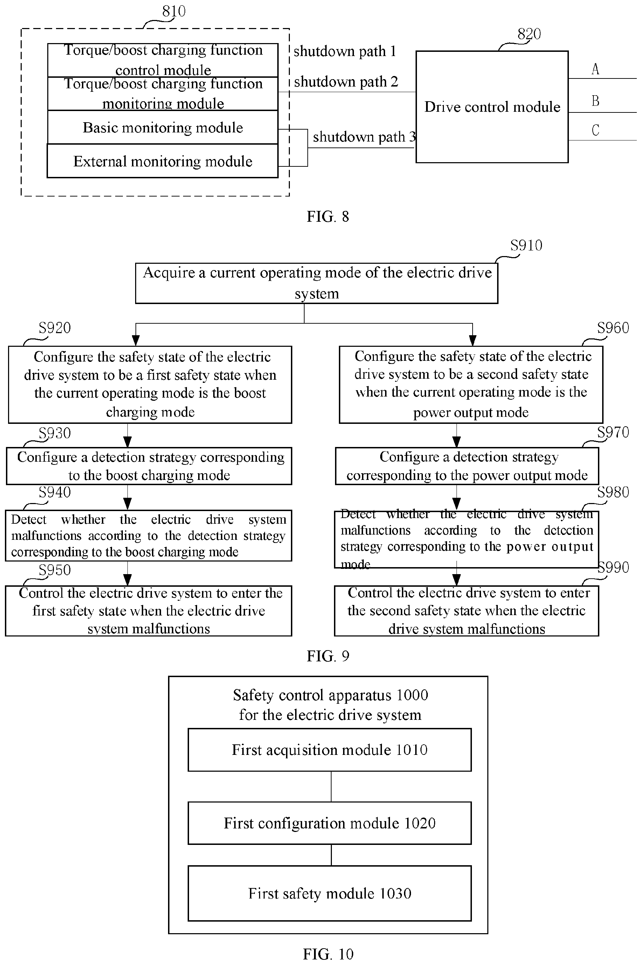

As an example, FIG. 8 is a schematic structural diagram of another motor controller provided by an embodiment of the present disclosure. Referring to FIG. 8, the motor controller includes a detection circuit 810 and a drive control module 820. When the current operating mode of the electric drive system is the power output mode, the detection circuit 810 can detect whether the electric drive system malfunctions according to the detection strategy corresponding to the power output mode. If it is detected by the detection circuit 810 that the electric drive system malfunctions, the motor controller can send a notification of entering the safety state to the drive control module 820 through shutdown path 1, shutdown path 2 or shutdown path 3, so that the drive control module 820 controls the electric drive system to enter the second safety state. When the current operating mode of the electric drive system is the boot charging mode, the detection circuit 810 can detect whether the electric drive system malfunctions according to the detection strategy corresponding to the boot charging mode. If it is detected by the detection circuit 810 that the electric drive system malfunctions, the motor controller can send a notification of entering the safety state to the drive control module 820 through shutdown path 1, shutdown path 2 or shutdown path 3, so that the drive control module 820 controls the electric drive system to enter the first safety state.

It can be understood that a detection strategy corresponding to the current operating mode is configured for the detection circuit, so that the electric drive system can use the same set of hardware circuits in the power output mode and the boost charging mode, which is beneficial to reducing circuit costs.

In some embodiments, detecting, based on the detection strategy, whether the electric drive system malfunctions includes: determining a target instruction corresponding to the current operating mode; acquiring actual operating parameters corresponding to the target instruction; and determining that the electric drive system malfunctions when the monitoring device of the detection circuit monitors that target operating parameters contained in the target instruction are different from the actual operating parameters.

In the present embodiment, the detection circuit may include a monitoring device, and the motor controller may configure a detection strategy corresponding to the current operating mode for the monitoring device, so that the motor controller can detect whether the electric drive system malfunctions through the monitoring device. In some embodiments, the target instruction corresponding to the current operating mode can be determined first, and the actual operating parameters corresponding to the target instruction can be obtained. When it is monitored that the target operating parameters contained in the target instruction are different from the actual operating parameters, it can be determined that the electric drive system malfunctions; when it is monitored that the target operating parameters contained in the target instruction are the same as the actual operating parameters, it can be determined that no fault occurs in the electric drive system.

In some embodiments, when the detection strategy is configured as a detection strategy corresponding to the power output mode, the target instruction may include a torque instruction, and the operating parameters may include an output torque. When a target output torque value included in the torque instruction is different from the actual output torque value output by the motor, it can be determined that the electric drive system malfunctions. When the target output torque value included in the torque instruction is the same as the actual output torque value output by the motor, it can be determined that no fault occurs in the electric drive system.

In an example, continuing to refer to FIG. 8, the monitoring device may include a torque/boost charging function control module and a torque/boost charging function monitoring module.

The torque/boost charging function control module can receive the driving current of the motor collected by a current sampling circuit, and calculate the actual output torque value based on the driving current. When it is detected by the torque/boost charging function control module that the target output torque value and the actual output torque value are different, the motor controller can send a notification of entering the safety state to the drive control module 820 through the shutdown path 1, so that the drive control module 720 controls the electric drive system to enter the second safety state.

The torque/boost charging function monitoring module can acquire the power input to the motor and the power loss of the motor, calculate the output power of the motor based on the power input to the motor and the power loss of the motor, and calculate the actual output torque value based on the output power of the motor. When it is detected by the torque/boost charging function monitoring module that the target output torque value and the actual output torque value are different, the motor controller can send a notification of entering the safety state to the drive control module 820 through the shutdown path 2, so that the drive control module 720 controls the electric drive system to enter the second safety state.

In some embodiments, when the configured detection strategy is a detection strategy corresponding to the boost charging mode, the target instruction may include a charging instruction, and the operating parameters may include a charging power. When the target charging power value included in the charging instruction is different from the actual charging power value of the traction battery, it can be determined that the electric drive system malfunctions. When the target charging power value included in the charging instruction is the same as the actual charging power value of the traction battery, it can be determined that no fault has occurred in the electric drive system.

In an example, continuing to refer to FIG. 8, the charging/boost charging function control module can receive the charging current of the traction battery collected by the current sampling circuit, and calculate the actual charging power value based on the charging current. When it is detected by the charging/boost charging function control module that the target charging power value and the actual charging power value are different, the motor controller can send a notification of entering the safety state to the drive control module 820 through the shutdown path 1, so that the drive control module 720 controls the electric drive system to enter the first safety state.

The torque/boost charging function monitoring module can acquire the actual charging power of the traction battery (i.e., the power output by the motor controller). When it is detected by the charging/boost charging function monitoring module that the target charging power value is different from the actual charging power value, the motor controller can send a notification of entering the safety state to the drive control module 820 through the shutdown path 2, so that the drive control module 720 controls the electric drive system to enter the first safety state.

It can be understood that it is possible to detect whether the electric drive system malfunctions by monitoring, through the monitoring device, whether the target operating parameters contained in the target instruction and the actual operating parameters are the same, so that the electric drive system can be promptly controlled to enter the safety state to ensure the safety of the entire vehicle when the torque control or charging control of the electric drive system are disabled.

In yet another embodiment of the present disclosure, detecting whether the electric drive system malfunctions further includes: determining that the electric drive system malfunctions when it is detected by a detection device in the detection circuit that the monitoring malfunctions.

In the embodiment of the present disclosure, the detection circuit may include a detection device that is configured for detecting whether the monitoring malfunctions, so that the motor controller may detect whether the electric drive system malfunctions through the detection device.

In some embodiments, the detection device may detect a clock, a register and the like of the monitoring device so as to detect whether the monitoring malfunctions, but is not limited thereto.

In an example, further referring to FIG. 8, the detection device may include a basic monitoring module and an external monitoring module that are both configured for monitoring whether a torque/boost charging function control module and a torque/boost charging function monitoring module malfunction. When the basic monitoring module (or external monitoring module) detects that the torque/boost charging function control module or the torque/boost charging function monitoring module malfunction, the motor controller can send a notification of entering the safety state to the drive control module 820 through the shutdown path 3, so that the drive control module 720 controls the electric drive system to enter a safety state corresponding to the current operating mode. Those skilled in the art should understand that the same is true for the motor controller shown in FIG. 7, which will not be described in detail here.

It can be understood that the motor controller can add a fault detection to the electric drive system by detecting, through the detection device, whether the monitoring device malfunctions. Therefore, when the monitoring device malfunctions, it is possible to find that the electric drive system malfunctions in time, and control the electric drive system to enter the safety state, thereby ensuring the safety of the entire vehicle.

Hereinafter, the safety control method for the electric drive system provided by the embodiment of the present disclosure will be described in detail based on a specific example.

FIG.9 is a schematic flow chart of a safety control process for an electric drive system provided by an embodiment of the present disclosure.

As shown in FIG. 9, the safety control process for the electric drive system may specifically include steps S910 to S990 described below.

At S910, a current operating mode of the electric drive system is acquired.

At S920, when the current operating mode is the boost charging mode, the safety state of the electric drive system is configured as a first safety state.

At S930, a detection strategy corresponding to the boost charging mode is configured.

At S940, it is detected whether the electric drive system malfunctions according to the detection strategy corresponding to the boost charging mode.

In some embodiments, S940 may include: determining that the target instruction is a torque instruction, acquiring an actual output torque value, and determining that the electric drive system malfunctions when it is monitored that the target output torque value included in the torque instruction is different from the actual output torque value.

In some embodiments, S940 may further include determining that the electric drive system malfunctions in response to detecting that a monitoring device in the electric drive system malfunctions.

At S950, the electric drive system is controlled to enter the first safety state when the electric drive system malfunctions.

In some embodiments, S940 may specifically include controlling the motor in the electric drive system to be open circuited.

At S960, when the current operating mode is the power output mode, the safety state of the electric drive system is configured as a second safety state.

At S970, a detection strategy corresponding to the power output mode is configured.

At S980, it is detected whether the electric drive system malfunctions according to the detection strategy corresponding to the power output mode.

In some embodiments, S980 may include: determining that the target instruction is a charging instruction, acquiring an actual charging power value, and determining that the electric drive system malfunctions when it is monitored that the target charging power value included in the charging instruction and the actual charging power value are different.

In some embodiments, S980 may further include determining that the electric drive system malfunctions in response to detecting that a monitoring device in the electric drive system malfunctions.

At S990, the electric drive system is controlled to enter the second safety state when the electric drive system malfunctions.

In some embodiments, S940 may specifically include controlling the motor in the electric drive system to achieve ASC.

According to the safety control method for the electric drive system provided in the embodiment of the present disclosure, the safety state and detection strategy corresponding to the current operating mode are set based on the current operating mode of the electric drive system, and the electric drive system is controlled to enter the safety state corresponding to the current operating mode in response to a fault, so that the safety state requirements of the electric drive system in the power output mode and the boost charging mode can be met simultaneously, and the same set of detection circuits can be adopted to save circuit costs.

FIG. 10 is a schematic structural diagram of a safety control apparatus for an electric drive system provided by an embodiment of the present disclosure.

In some embodiments of the present disclosure, the apparatus shown in FIG. 10 may be applied to a motor controller of a vehicle.

As shown in FIG. 10, the safety control apparatus of the electric drive system may include a first acquisition module 1010, a first configuration module 1020 and a first safety module 1030.

The first acquisition module 1010 is configured for acquiring a current operating mode of the electric drive system, and the current operating mode includes a boost charging mode and a power output mode.

The first configuration module 1020 is configured for configuring a safety state corresponding to a current operating mode for the electric drive system.

The first safety module 1030 is configured for controlling the electric drive system to enter a safety state in response to a fault, and in the safety state, the output torque of the electric drive system is caused to be less than or equal to a preset torque value corresponding to the current operating mode.

The safety control apparatus for the electric drive system of the embodiment of the present disclosure is capable of acquiring the current operating mode (the current operating mode includes the boost charge mode and the power output mode) of the electric drive system; configuring a safety state corresponding to the current operating mode for the electric drive system; and controlling the electric drive system to enter the safety state in response to a fault, and in the safety state, the output torque of the electric drive system is caused to be less than or equal to a preset torque value corresponding to the current operating mode. As can be seen, different from the related art that the same safety state is adopted regardless of the operating mode of the electric drive system, different safety states are defined for different operating modes of the electric drive system in the embodiment of the present disclosure. In this way, a corresponding safety state can be configured according to the current operating mode of the electric drive system, so that the electric drive system can enter the safety state corresponding to the current operating mode in response to a fault, thereby preventing from generating unexpected torque output regardless of the operating mode of the electric drive system, and achieving the purpose of meeting the safety target requirements for the torque.

In another embodiment of the present disclosure, the first configuration module 1020 includes: a first configuration sub-module, configured for configuring the safety state of the electric drive system as a first safety state when the current operating mode is the boost charging mode.

The first safety module 1030 includes a first safety sub-module configured for controlling the electric drive system to enter the first safety state.

In the first safety state, the charging circuit between the electric drive system and the charging pile is disconnected, and the power supply circuit of the motor in the electric drive system is disconnected.

In yet another embodiment of the present disclosure, the first safety sub-module includes a first safety unit configured for controlling the disconnection of a common section of the charging circuit and the power supply circuit.

In yet another embodiment of the present disclosure, the first safety unit is specifically configured for controlling an inverter in the electric drive system to be open circuited.

In yet another embodiment of the present disclosure, the first configuration module 1020 includes: a second configuration sub-module, configured for configuring the safety state of the electric drive system as a second safety state when the current operating mode is the power output mode.

The first safety module 1030 includes a second safety sub-module configured for controlling the electric drive system to enter the second safety state.

In the second safety state, the ASC of the motor in the electric drive system is achieved.

In yet another embodiment of the present disclosure, the first safety module 1030 includes:
a first detection sub-module, configured for detecting whether the electric drive system malfunctions; and
a third safety sub-module, configured for controlling the electric drive system to enter the safety state in response to detecting that the electric drive system malfunctions.

In yet another embodiment of the present disclosure, the first detection sub-module includes:
a first configuration unit, configured for configuring a detection strategy corresponding to the current operating mode for the detection circuit in the electric drive system; and
the first detection unit, configured for detecting, through a monitoring device in the detection circuit, whether the electric drive system malfunctions according to the detection strategy.

In yet another embodiment of the present disclosure, the first detection sub-module includes:
a second detection unit, configured for determining that the electric drive system malfunctions in response to detecting by the detection device in the detection circuit that the monitoring device malfunctions.

It should be noted that the safety control apparatus 1000 for the electric drive system shown in FIG. 10 can execute various steps in the method embodiments shown in FIG.1 and FIG. 9, and realize the various processes and effects in the method embodiments shown in FIG.1 and FIG. 9, which will not be elaborated here.

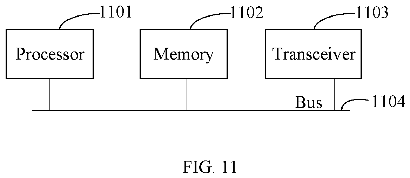

FIG. 11 is a schematic structural diagram of a safety control device for an electric drive system provided by an embodiment of the present disclosure.

In some embodiments of the present disclosure, the safety control device for the electric drive system shown in FIG. 11 may be a motor controller.

As shown in FIG. 11, the safety control device for the electric drive system may include a processor 1101 and a memory 1102 storing executable instructions. The processor 1101 is configured for read the executable instructions from the memory 1102 and execute the executable instructions to implement the safety control method for the electric drive system provided in the embodiment of the present disclosure.

In some embodiments, the processor 1101 may include a central processing unit (CPU), or an application specific integrated circuit (ASIC), or may be configured as one or more integrated circuits implementing the embodiments of the present application.

The memory 1102 may include a large capacity memory for information or instructions. By way of example and not limitation, the memory 1102 may include a hard disk drive (HDD), a floppy disk drive, a flash memory, an optical disk, a magneto-optical disk, a magnetic tape, or a universal serial bus (USB) drive, or a combination of two or more of them. In appropriate cases, the memory 1102 may include removable or non-removable (or fixed) media. In appropriate cases, the memory 1102 may be inside or outside an integrated gateway device. In a specific embodiment, the memory 1102 is a non-volatile solid-state memory. In a specific embodiment, the memory 1102 includes a read-only memory (ROM). In appropriate cases, the ROM may be a mask-programmed ROM, a programmable ROM (PROM), an erasable PROM (EPROM), an electrically erasable PROM (EEPROM), an electrically alterable ROM (EAROM), or a flash memory, or a combination of two or more of them.

The processor 1101 can implement each step in the method embodiments shown in FIG. 1 and FIG. 9 by reading and executing computer program instructions stored in the memory 1102.

In an example, the safety control device for the electric drive system may further include a transceiver 1103 and a bus 1104. As shown in FIG. 11, the processor 1101, the memory 1102 and the transceiver 1103 are connected via the bus 1104 and communicate with each other.

The bus 1104 includes hardware, software, or both of them. By way of example and not limitation, the bus may include an Accelerated Graphics Port (AGP) or other graphics bus, an Extended Industry Standard Architecture (EISA) bus, a Front Side Bus (FSB), a Hyper Transport (HT) interconnect, an Industrial Standard Architecture (ISA) bus, an InfiniBand interconnect, a Low Pin Count (LPC) bus, a memory bus, a Micro Channel Architecture (MCA) bus, a Peripheral Component Interconnect (PCI) bus, a PCI-Express (PCI-X) bus, a Serial Advanced Technology Attachment (SATA) bus, a Video Electronics Standards Association Local Bus (VLB) bus, or other suitable buses, or a combination of two or more of them. Bus 1104 may include one or more buses, where appropriate. Although a particular bus is described and illustrated in embodiments of the present application, the present application contemplates any suitable bus or interconnect.

The embodiment of the present disclosure further provides a computer readable storage medium that can store a computer program. When the computer program is executed by a processor, the processor implements the safety control method for the electric drive system provided by the embodiment of the present disclosure.

The above-mentioned storage medium may, for example, include a memory 1102 storing computer program instructions, and the above-mentioned instructions may be executed by the processor 1101 of the safety control device of the electric drive system to implement the safety control method for the electric drive system provided in the embodiment of the present disclosure. In some embodiments, the storage medium may be a non-transitory computer readable storage medium. For example, the non-transitory computer readable storage medium may be a ROM, a random access memory (RAM), a compact disc ROM (CD-ROM), a magnetic tape, a floppy disk, an optical data storage device, etc.

An embodiment of the present disclosure further provides a computer program product, including a computer program or instructions that, when executed by a processor, implements the safety control method for the electric drive system provided by the embodiments of the present disclosure.

Herein, relational terms such as "first" and "second" are used merely to distinguish an entity or operation from another entity or operation, and do not necessarily require or imply the existence of any such actual relationship or sequence between these entities or operations. Furthermore, the terms "comprising/including" is intended to cover a non-exclusive inclusion, such that a process, method, article, or device including a list of elements includes not only those elements but also other elements not expressly listed, or elements inherent to the process, method, article or device.

The above description only illustrates specific embodiments of the present disclosure, so that those skilled in the art can understand or implement the present disclosure. Various modifications to these embodiments will be apparent to those skilled in the art, and the general principles defined herein can be implemented in other embodiments without departing from the spirit or scope of the present disclosure. Therefore, the present disclosure will not be limited to the embodiments described herein, but is the widest scope consistent with the principles and novel features disclosed herein.

## Claims

1. A safety control method for an electric drive system, comprising:
acquiring a current operating mode of the electric drive system, wherein the current operating mode comprises a boost charging mode and a power output mode;
configuring a safety state corresponding to the current operating mode for the electric drive system; and
controlling the electric drive system to enter the safety state in response to a fault, in the safety state, an output torque of the electric drive system is caused to be less than or equal to a preset torque value corresponding to the current operating mode.

2. The method according to claim 1, wherein the configuring a safety state corresponding to the current operating mode for the electric drive system comprises:
in response to the current operating mode being the boost charging mode, configuring the safety state of the electric drive system as a first safety state, in the first safety state, a charging circuit between the electric drive system and a charging pile is disconnected, and a power supply circuit of a motor in the electric drive system is disconnected;
wherein the controlling the electric drive system to enter the safety state comprises:
controlling the electric drive system to enter the first safety state.

3. The method according to claim 2, wherein the controlling the electric drive system to enter the first safety state comprises:
controlling a common section of the charging circuit and the power supply circuit to be disconnected.

4. The method according to claim 1, wherein the configuring a safety state corresponding to the current operating mode for the electric drive system comprises:
in response to the current operating mode being the power output mode, configuring the safety state of the electric drive system as a second safety state, in the second safety state, an active short circuit of a motor in the electric drive system is achieved;
wherein the controlling the electric drive system to enter the safety state comprises:
controlling the electric drive system to enter the second safety state.

5. The method according to claim 1, wherein the controlling the electric drive system to enter the safety state in response to a fault comprises:
detecting whether the electric drive system malfunctions; and
controlling the electric drive system to enter the safety state in response to detecting that the electric drive system malfunctions.

6. The method according to claim 5, wherein the detecting whether the electric drive system malfunctions comprises:
configuring a detection strategy corresponding to the current operating mode for a detection circuit in the electric drive system; and
detecting, by a monitoring device in the detection circuit, whether the electric drive system malfunctions according to the detection strategy.

7. The method according to claim 6, wherein the detecting whether the electric drive system malfunctions further comprises:
in response to detecting by a detection device in the detection circuit that the monitoring device malfunctions, determining that the electric drive system malfunctions.

8. A safety control apparatus for an electric drive system, comprising:
a first acquisition module, configured for acquiring a current operating mode of the electric drive system, wherein the current operating mode comprises a boost charging mode and a power output mode;
a first configuration module, configured for configuring a safety state corresponding to the current operating mode for the electric drive system; and
a first safety module, configured for controlling the electric drive system to enter the safety state in response to a fault, in the safety state, an output torque of the electric drive system is caused to be less than or equal to a preset torque value corresponding to the current operating mode.

9. The apparatus according to claim 8, wherein the first configuration module is configured for:
configuring the safety state of the electric drive system as a first safety state in response to the current operating mode being the boost charging mode, in the first safety state, a charging circuit between the electric drive system and a charging pile is disconnected, and a power supply circuit of a motor in the electric drive system is disconnected;
wherein the controlling the electric drive system to enter the safety state comprises:
controlling the electric drive system to enter the first safety state.

10. The apparatus according to claim 9, wherein the first configuration module is configured for controlling a common section between the charging circuit and the power supply circuit to be disconnected.

11. The apparatus according to claim 10, wherein the first configuration module is configured for controlling an inverter in the electric drive system to be open circuited.

12. The apparatus according to claim 8, wherein the first configuration module is configured for:
configuring the safety state of the electric drive system as a second safety state in response to the current operating mode being the power output mode, in the second safety state, an active short circuit of a motor in the electric drive system is achieved;
wherein the controlling the electric drive system to enter the safety state comprises:
controlling the electric drive system to enter the second safety state.

13. The apparatus according to claim 8, wherein the first safety module is configured for:
detecting whether the electric drive system malfunctions; and
controlling the electric drive system to enter the safety state in response to detecting that the electric drive system malfunctions.

14. The apparatus according to claim 13, wherein the first safety module is configured for:
configuring a detection strategy corresponding to the current operating mode for a detection circuit in the electric drive system; and
detecting, by a monitoring device in the detection circuit, whether the electric drive system malfunctions according to the detection strategy.

15. The apparatus according to claim 14, wherein the first safety module is configured for:
determining that the electric drive system malfunctions in response to detecting by a detection device in the detection circuit that the monitoring device malfunctions.

16. A safety control device for an electric drive system, comprising:
a processor; and
a memory for storing executable instructions;
wherein the processor is configured to read the executable instructions from the memory, and execute the executable instructions to implement the safety control method for the electric drive system according to any one of claims 1 to 7.

17. A computer readable storage medium, wherein the storage medium is stored with a computer program that when executed by a processor, causes the processor to implement the safety control method for the electric drive system according to any one of claims 1 to 7.

18. A computer program product, comprising a computer program or instructions that when executed by a processor, causes the processor to implement the safety control method for the electric drive system according to any one of claims 1 to 7.
